(19) Europäisches Patentamt
European Patent Office
Office européen des brevets

(11) Veröffentlichungsnummer: **0 179 200 B1**

# (12) EUROPÄISCHE PATENTSCHRIFT

(45) Veröffentlichungstag der Patentschrift: **27.09.89**

(51) Int. Cl.⁴: **H 04 N 5/14**, H 04 N 5/208

(21) Anmeldenummer: **85108261.0**

(22) Anmeldetag: **04.07.85**

## (54) Verfahren zur Verbesserung der subjektiv empfundenen Bildschärfe von Fernsehbildern.

(30) Priorität: **26.10.84 DE 3439202**

(43) Veröffentlichungstag der Anmeldung: **30.04.86 Patentblatt 86/18**

(45) Bekanntmachung des Hinweises auf die Patenterteilung: **27.09.89 Patentblatt 89/39**

(84) Benannte Vertragsstaaten: **AT BE CH DE FR GB IT LI**

(56) Entgegenhaltungen:
**DE-A- 2 309 884**
**DE-A- 2 937 958**
**DE-B- 1 537 111**
**US-A- 4 268 864**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth/Bay. (DE)**

(72) Erfinder: **Rumland, Rainer, Dipl.-Ing., Irmgardstrasse 12, D-8501 Rosstal (DE)**

EP 0 179 200 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Verbesserung der subjektiv empfundenen Bildschärfe von Fernsehbildern in einem Industriefernsehsystem mit den im Oberbegriff des Anspruchs 1 angegebenen Merkmalen.

Bisher wurden Aperturkorrekturschaltungen dazu verwendet, Aperturverluste von Aufnahme- und/oder Wiedergaberöhren auszugleichen oder um ein begrenztes Video-Frequenzband am oberen Bandende anzuheben und im mittleren Frequenzbereich die Anstiegsflanken zu versteilern (S/W-Sprünge im Bildsignal).

Bei Einröhren-Farbkameras mit der sehr begrenzten H-Bandbreite lässt sich die Gesamtauflösung durch eine V-Aperturkorrektur verbessern. Bei Farbfernsehsystemen wird durch die begrenzte Kanalbandbreite (im wesentlichen bis 4 MHz für das Luminanzsignal) durch Aperturkorrekturen eine Flankenversteilerung erreicht. Ein Mangel an Bandbreite wird demnach bei den genannten Beispielen durch H- und V-Aperturkorrekturen ausgeglichen, d.h. durch Schaltungen, mittels deren eine Anhebung von bestimmten Bilddetails in Horizontal- und Vertikalrichtung, also von Ortsfrequenzen, erfolgt.

Schwarz/Weiss-Fernehkameras mit sehr breitbandigen Videoverstärkern bis beispielsweise 20 MHz (z.B. die Fernsehkamera FA 76 der Anmelderin mit H-Apertur mit oder ohne Crispening) – wie sie bisher in Industriefernsehsystemen verwendet werden – sind in der Regel auf maximale Auflösung ausgerichtet (z.B. 800 bis 900 Zeilen Auflösung in horizontaler Richtung bei der bekannten Fernsehkamera FA 76), was zu äusserst detailreichen Aufnahmen führt.

Betrachtet man jedoch die Bilder derartig hochauflösender Fernsehkameras auf dem Bildschirm eines Wiedergabegerätes, z.B. einem Monitor, aus einer bestimmten Entfernung, wie sie beispielsweise in Kontrollwarten üblich ist, d.h. also in einem Abstand zum Monitor zwischen 2 und 3 Metern je nach Bildschirmgrösse (Faustregel: etwa 5× die Bildschirmhöhe), so erweist sich die beschriebene hohe Bildauflösung als unzweckmässig, da das Auge das Dargebotene nicht mehr unterscheiden kann. Ausgehend von der CCIR-Norm der Fernsehtechnik entspricht nämlich die Anwendung der oben genannten Faustregel für den Sichtabstand bei Kontrollwarten quasi der Wirkung eines optischen Tiefpasses für das Auge, aber nicht nur in vertikaler, sondern auch in horizontaler Richtung.

Die Entwicklung in der Fernsehkameratachnik führte von anfänglichen 5 MHz Videobandbreite des Verstärkers über spätere 10 MHz zu den heutigen, häufig standardmässigen 20 MHz Videobandbreite. Es zeigt sich jedoch, dass der Überschuss an Bandbreite oberhalb 5 MHz für Standard-Sichtbedingungen nicht ausgenutzt wird. Lediglich bei kurzem Betrachtungsabstand wird selbstverständlich eine gute Auflösung genutzt, aber nur in H-Richtung.

Davon ausgehend, dass bei bisherigen Industriefernsehsystemen die Bemühungen der Fachwelt dahin gehen, Bilder mit möglichst hoher Auflösung zu erzeugen, diese Bilder mit möglichst hoher Auflösung zu übertragen und die übertragenen Bilder mit möglichst hoher Auflösung darzustellen, liegt der Erfindung die Aufgabe zugrunde, einen Weg aufzuzeigen, wie bei Verwendung eines Verfahrens mit den im Oberbegriff des Anspruchs 1 angegebenen Merkmalen trotz eines Verzichtes auf Auflösung und trotz einer Verringerung der zu übertragenden Bandbreite für den Betrachter, insbesondere in Kontrollwarten, ein subjektiv deutlich schärfer empfundenes Bild als das herkömmlicher hochauflösender Fernsehkameras erzeugt werden kann.

Diese Aufgabe wird bei einem Verfahren der im Oberbegriff des Anspruchs 1 angegebenen Art durch die im kennzeichnenden Teil des Anspruchs 1 angegebenen Merkmale gelöst.

Vorteilhafte Weiterbildungen des erfindungsgemässen Verfahrens ergeben sich aus den Ansprüchen 2 bis 6.

Gemäss der Erfindung ist eine an sich bekannte V-Aperturkorrektur vorgesehen, die bisher insbesondere bei Industriefernsehkameras aus Preisgründen nicht angewendet wurde. Ferner ist eine H-Apertur vorgesehen, die im Frequenzbereich von vorzugsweise 3 bis 5 MHz optimal wirksam ist. Dabei ergibt sich eine planare Filterung im Ortsfrequenzbereich, die alle höheren Frequenzen weitgehend eliminiert.

Es wird demnach erfindungsgemäss bewusst auf grosse Bandbreite verzichtet, die Detailauflösung oberhalb 5 MHz weitgehend eliminiert, dafür aber der Bereich zwischen vorzugsweise 3 und 5 MHz überbetont. D.h., das Signal in diesem Frequenzbereich wird flankenversteilert und überhöht (Überschwinger) dargestellt. Durch die Aperturkorrektur wird eine planare Filterung derart erzielt, dass das Maximum der Aperturkorrektur unterhalb der Video-Grenzfrequenz liegt und dem Betrachtungsabstand angepasst ist. In der Natur und in anderen durchschnittlichen Szenen vorkommende höherfrequente Bilddetails liefern in der Regel nur geringe Signalamplituden und geringe Kontrastsprünge. Daher werden kleine Signalsprünge mit dem gewählten Korrekturfaktor vergrössert. Bereits grosse Singalsprünge werden ebenfalls mit diesem Faktor vergrössert, anschliessend jedoch auf die maximal zulässige Videoamplitude in einer Begrenzerstufe beschnitten.

Die Erfindung wird im folgenden unter Bezugnahme auf die Zeichnung beispielsweise näher erläutert. Es zeigen:

Fig. 1 ein Blockschaltbild zur Erläuterung des erfindungsgemässen Verfahrens,

Fig. 2 die frequenzgangmässige Wirkung einer H-Aperturstufe,

Fig. 3 ein Signaldiagramm zum Blockschaltbild nach Fig. 1 und

Fig. 4 ein weiteres Signaldiagramm.

Erfindungsgemäss wird trotz verringerter Auflösung und verringerter Übertragungsbandbreite ein subjektiv empfundener deutlich schärferer Bildeindruck für den Betrachter erzeugt, wobei sich die Bandbreitenbegrenzung über die Filterwirkung der H-Apertur ergibt. Es wird dabei die Erkenntnis ausgenutzt, dass es, um dem Auge Schärfe vorzutäuschen, lediglich notwendig ist, mit kurzen Anstiegszeiten im Signal zu arbeiten. Bereits wenige steile Kanten im Bild signalisieren dem Auge ein «schärferes Bild». Ein leichter Überschwinger erhöht diesen Eindruck durch Vergrösserung des Kontrastsprunges. Mit der Erfindung wird der überraschende Effekt erzielt, dass das messtechnisch weitaus schärfere Bild der konventionellen Fernsehkamera für das Auge des Betrachters weitaus unschärfer erscheint, als das erfindungsgemäss manipulierte Bild bei gleichzeitiger Einsparung an Übertragungsbandbreite. Diese Massnahmen und Verhältnisse sind in der Zeichnung schematisch dargestellt, wobei die durch die H- und V-Aperturkorrektur vorgenommene Kantenüberhöhung der Hell/Dunkel- bzw. Dunkel/Hell-Flanken im Bildsignal bei gleichzeitigem Verzicht auf Bildauflösung durch eine planare Filterung derart erzielt wird, dass das Aperturkorrektur-Maximum unterhalb der Video-Grenzfrequenz liegt und dem üblichen Betrachtungsabstand angepasst ist.

In der Zeichnung ist ferner schematisch dargestellt, wie die H-Aperturkorrektur gleichzeitig durch eine Filterung in H-Richtung eine Verringerung der zu übertragenden Bandbreite bewirkt.

Figur 1 zeigt ein Blockschaltbild einer Anordnung zur Erläuterung und Durchführung des erfindungsgemässen Verfahrens. Ein Taktgeber 1 steuert die H- und V-Ablenkgeneratoren 2 einer nicht näher dargestellten Fernsehkamera an. Die Ablenkgeneratoren 2 speisen ihrerseits die Ablenkspulen einer Aufnahmeröhre 3. Eine Szene 4 wird mittels eines Objektivs 3′ auf dem Target der Aufnahmeröhre 3 abgebildet. Das dem Target entnommene Videosignal wird zunächst in einem Vorverstärker 5 verstärkt und dann mit einer normgerechten Austastung (Austaststufe 6) versehen. Am Ausgang 7 der Austaststufe 6 steht ein ausgetastetes Videosignal zur Verfügung, das drei weiteren, parallel angeordneten Stufen - eine H-Aperturstufe 8, eine Ein-Zeilen-V-Aperturstufe 10 und eine Laufzeit-Ausgleichsstufe 12 - zugeführt wird. Die H-Aperturstufe 8 erzeugt ein hochfrequentes Apertursignal mit seiner maximalen Wirkung bei ca. 3 bis 4 MHz. Das Apertursignal steht am Ausgang 9 dieser Stufe zur Verfügung.

Ausserdem speist das BA-Signal am Ausgang 7 der Austaststufe 6 die Ein-Zeilen-V-Aperturstufe 10, deren Signal am Ausgang 11 ansteht. Parallel zu den Stufen 8 und 10 wird noch die Laufzeit-Ausgleichsstufe 12 angesteuert, die der Laufzeit der Ein-Zeilen-V-Aperturstufe 10 entspricht. Die Laufzeit der H-Aperturstufe 8 wird so gewählt, dass sie der V-Aperturlaufzeit entspricht.

Die Signale an den Ausgängen 9, 11 und 13 der Stufen 8, 10 bzw. 12 werden in einer Summierschaltung 14 addiert. Das neue Signal, das nun mit dem H- und V-Korrektursignal versehen ist, wird nun einer Begrenzerschaltung 15 zugeführt. Anschliessend wird in einer Stufe 16 das S-Signal 17 zugemischt. Am Ausgang der Stufe 16 (S-Signalzumischung) steht das Ausgangssignal 18 als normgerechtes Videosignal an.

Figur 2 zeigt das H-Korrektursignal bzw. die frequenzgangmässige Wirkung einer H-Aperturstufe, wobei auf der Abszisse die Frequenz in MHz und auf der Ordinate die Prozentangaben aufgetragen sind.

Figur 3 zeigt als Diagramm schematisch die Summenwirkung der Signale an den Ausgängen 9, 11 und 13 mit unterschiedlich starker Anhebung, wobei auf Abszisse und Ordinate ebenfalls die Frequenz bzw. Prozentwerte aufgetragen sind. Gemäss Figur 3 sind dabei für V im unteren Frequenzbereich Werte zwischen 100 und 200 Prozent eingezeichnet, während für H ein solcher prozentualer Kurvenverlauf im Bereich von 3 bis 5 MHz dargestellt ist.

Die bei grosser Anhebung auftretenden Signalspitzen werden in der Begrenzerschaltung 15 abgeschnitten, wie dies in Figur 4 schematisch dargestellt ist.

Die Filterwirkung der H-Apertur kann wie folgt erklärt werden:

Das H-Apertursignal wird üblicherweise durch Bildung des zweiten Differentialquotienten aus dem Videosignal und Zumischung dieses Signals zum negierten Original-Videosignal gewonnen. Ein anderes Verfahren arbeitet entsprechend dem klassischen Zwei-Zeilen-V-Aperturverfahren, nämlich durch zweimalige Verzögerung des Videosignals um je einen Bildpunkt (wobei die Bildpunktweite durch die Verzögerung festgelegt werden kann). Das unverzögerte (A 1), das einmal verzögerte (A 2) und das zweimal verzögerte Signal A 3 werden nach folgender Funktion zum korrigierten Ausgangssignal A 4 verknüpft:

$$A4 = A2 + \left[A2 - \frac{1}{2}(A1 + A3)\right].$$

Werden in einem breitbandigen Videosignal die Bildpunkte sehr hochfrequent, also mit sehr kurzen Bildpunktzeiten gegenüber der Verzögerungszeit der Verzögerungsglieder, so kann die Gesamtanordnung kein brauchbares Korrektursignal bilden, d.h. mit steigender Videofrequenz wird oberhalb der Frequenz, die sich aus der zweimaligen Verzögerung ergibt, die Korrekturamplitude abnehmen.

Die erfindungsgemässen Massnahmen zur Verbesserung der Bildschärfe können nicht nur in der Fernsehkamera selbst, sondern auch monitorseitig oder auf der Übertragungsstrecke vorgenommen werden. Der Ort, wo die Massnahmen zur Verbesserung vorgenommen werden, kann je nach der Anzahl der verwendeten Geräte (Kameras, Monitore) gewählt werden. Demnach würde beispielsweise bei Verwendung vieler Fernsehkameras die Verbesserung der Bildschärfe monitorseitig vorgenommen werden. Am wirkungsvollsten werden die Massnahmen zur Verbesserung der Bildschärfe kameraseitig vorgenommen, da sich dadurch der beste Störabstand ergibt und ein einfacher Zugriff zu den zu verarbeitenden Signalen gewährleistet ist. Werden die Massnahmen monitorseitg oder in der Übertragungsstrecke vorgenommen, so ist ein zusätzlicher Aufwand notwendig, da die Synchronimpulse getrennt behandelt werden müssen und gegebenenfalls Massnahmen zur Störbeseitigung ergriffen werden müssen. Diese zusätzlichen Massnahmen sind jedoch dem Fachmann geläufig und brauchen daher nicht sonderlich erläutert zu werden, da er sie ohne weiteres im jeweiligen Anwendungsfall vorzusehen vermag.

Die H- und V-Aperturkorrektur bzw. die zugehörigen Schaltungen sind dem Fachmann ebenfalls geläufig und brauchen daher nicht näher erläutert zu werden.

## Patentansprüche

1. Verfahren zur Verbesserung der subjektiv empfundenen Bildschärfe von Fernsehbildern in einem Industriefernsehsystem, wobei
- die Fernsehbilder in einer Fernsehkamera erzeugt,
- über eine Übertragungsstrecke übertragen und
- auf einem Monitor dargestellt werden, wobei
- die Fernsehbilder einer in horizontaler und in vertikaler Richtung wirksamen Anhebung der Ortsfrequenzen unterworfen werden, dadurch gekennzeichnet, dass
- die Anhebung ihre maximale Wirkung im Frequenzbereich von 3–5 MHz, auf die horizontale Richtung bezogen, hat und durch diese Anhebung eine Kantenüberhöhung der Schwarz/Weiss- bzw. Weiss/Schwarz-Übergänge im Bildsignal erfolgt.

2. Verfahren nach Anspruch 1, dadurch gekennzeichnet, dass beim Auftreten übergrosser Signalamplituden des H- oder V-Korrektursignals eine Begrenzerschaltung wirksam wird.

3. Verfahren nach Anspruch 1 oder 2, dadurch gekennzeichnet, dass die Verbesserung der subjektiv empfundenen Bildschärfe kameraseitig erfolgt.

4. Verfahren nach Anspruch 1 oder 2, dadurch gekennzeichnet, dass die Verbesserung der subjektiv empfundenen Bildschärfe unter zusätzlicher Synchronimpulsbearbeitung monitorseitig erfolgt.

5. Verfahren nach Anspruch 1 oder 2, dadurch gekennzeichnet, dass die Verbesserung der subjektiv empfundenen Bildschärfe unter zusätzlicher Synchronimpulsbearbeitung in der Übertragungsstrecke zwischen Fernsehkamera(s) und Monitor(en) erfolgt.

6. Verfahren nach einem der Ansprüche 3 bis 5, dadurch gekennzeichnet, dass der Ort für die Massnahme zur Verbesserung der subjektiv empfundenen Bildschärfe je nach Anzahl der verwendeten Fernsehkameras und/oder Monitore gewählt wird.

## Claims

1. Method for improving the subjectively sensed picture sharpness of television pictures in an industrial television system, in which
- the television pictures are generated in a television camera,
- transmitted over a transmission link and
- displayed on a monitor,
- the television pictures being subjected to a preemphasis of the local frequencies which is effective in the horizontal and vertical direction, characterized in that
- the pre-emphasis has its maximum effect in the frequency range from 3–5 MHz referred to the horizontal direction and this pre-emphasis results in an edge overshoot of the black/white and white/black transitions in the picture signal.

2. Method according to Claim 1, characterized in that a limiter circuit becomes effective when excessive signal amplitudes occur in the H or V correction signal.

3. Method according to Claim 1 or 2, characterized in that the improvement in the subjectively sensed picture sharpness is effected on the camera side.

4. Method according to Claim 1 or 2, characterized in that the improvement of the subjectively sensed picture sharpness is effected on the monitor side with additional synchronizing pulse processing.

5. Method according to Claim 1 or 2, characterized in that the improvement in the subjectively sensed picture sharpness is effected in the transmission link between television camera(s) and monitor(s) with additional synchronizing pulse processing.

6. Method according to one of Claims 3 to 5, characterized in that the location for the measure for improving the subjectively sensed picture sharpness is selected in dependence on the number of television cameras and/or monitors used.

## Revendications

1. Procédé pour améliorer la netteté, ressentie de façon subjective, d'images de télévision dans un système de télévision industrielle, selon lequel
- les images de télévision sont formées dans une caméra de télévision,
- sont transmises par l'intermédiaire d'une voie de transmission, et
- sont représentées sur un moniteur,
- les images de télévision étant soumises à une intensification des fréquences locales dans la direction horizontale et dans la direction verticale, caractérisé par le fait que
- l'intensification produit son effet maximum dans la plage des fréquences de 3–5 MHz, rapportée à la direction horizontale, et cette intensification fournit une intensification des bords des jonctions noir/blanc ou blanc/noir dans le signal d'image.

2. Procédé selon la revendication 1, caractérisé en ce que dans le cas de l'apparition d'amplitudes excessives du signal de correction horizontale ou verticale, un circuit limiteur devient actif.

3. Procédé selon la revendication 1 ou 2, caractérisé en ce que l'amélioration de la netteté de l'image, ressentie de façon subjective, est réalisée côté caméra.

4. Procédé selon la revendication 1 ou 2, caractérisé en ce que l'amélioration de la netteté de l'image, ressentie de façon subjective, est réalisée côté moniteur, au moyen d'un traitement supplémentaire d'impulsions de synchronisation.

5. Procédé selon la revendication 1 ou 2, caractérisé en ce que l'amélioration de la netteté de l'image, ressentie de façon subjective, s'effectue moyennant le traitement supplémentaire d'une impulsion de synchronisation dans la section de transmission entre la ou des caméras de télévision et le ou des moniteurs.

6. Procédé selon l'une des revendications 3 à 5, caractérisé en ce que l'emplacement du dispositif servant à améliorer la netteté de l'image, ressentie de façon subjective, est choisi en fonction du nombre des caméras de télévision utilisées et/ou des moniteurs utilisés.

FIG. 1

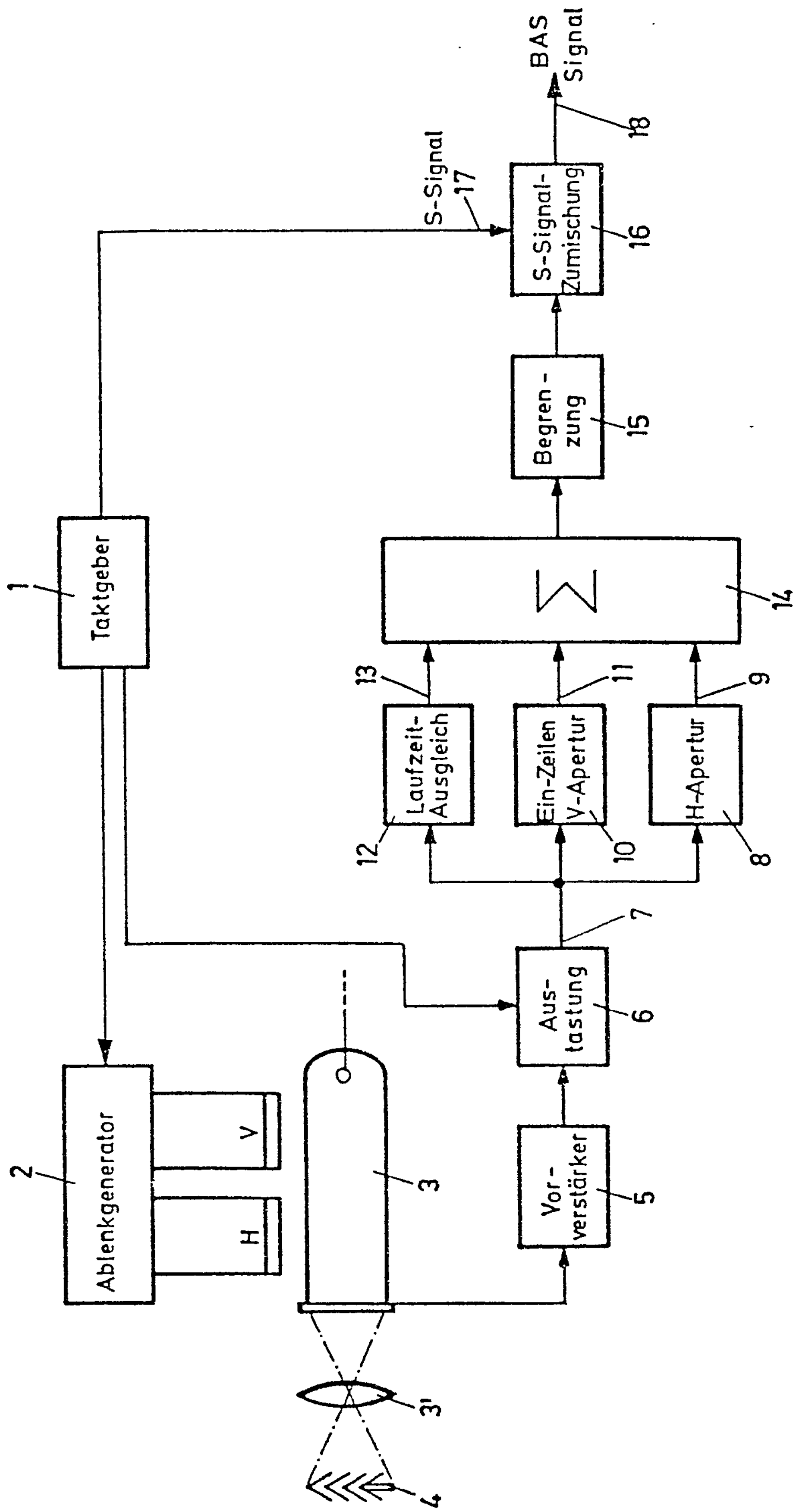
Taktgeber
Ablenkgenerator
H
V
Vor-
verstärker
Aus-
tastung
Laufzeit-
Ausgleich
Ein-Zeilen
V-Apertur
H-Apertur
Σ
Begren-
zung
S-Signal-
Zumischung
S-Signal
BAS
Signal
1
2
3
3'
4
5
6
7
8
9
10
11
12
13
14
15
16
17
18

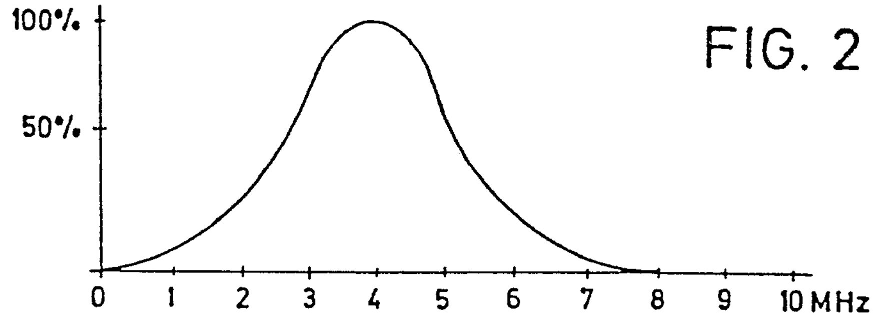


FIG. 2

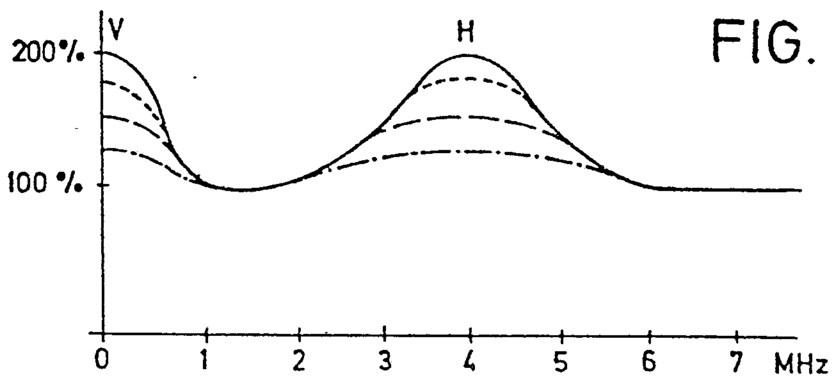


FIG. 3

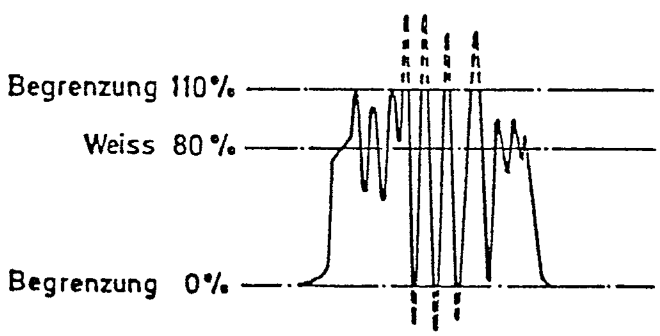


FIG. 4